# EUROPEAN PATENT APPLICATION

(11) **EP 4 733 231 A1**
(43) Date of publication of application: **29.04.2026**
(21) Application number: 25209850.4
(22) Date of filing: 20.10.2025
(51) Int. Cl.: B65H 1/30, B65H 29/14, B65H 83/02

(54) **DYNAMIC BUFFERING APPARATUS AND METHOD FOR PROCESSING DOCUMENTS**

(30) Priority: 24.10.2024 IT 202400023703; 13.08.2025 IT 202500021481
(71) Applicant: BÖWE SYSTEC GmbH, 86159 Augsburg (DE)
(72) Inventor: Prataiola, Alessandro, 38122 Trento (IT)
(74) Representative: Charrier Rapp & Liebau

(57) **Abstract**

A dynamic buffering apparatus (800) and a method for the processing individual sheet documents having at least one respective identification code, comprises: a conveyor line, and an upstream device (810) delivering documents in individual sheets through said conveyor line; a individual sheet (505) buffering device (100) comprising a deformable supporting plane, which creates a collection of sheets in the form of a sheet stack (514) on said supporting plane, in which the last incoming sheet (510) is placed below the stack at its base by deforming the supporting plane, and where the first single outgoing sheet (520) is released from the top of the sheet stack (514) forming an outgoing sheet stream (525); a reading device (831) that reads the identification code of the passing through outgoing sheets provided by the buffering device; a downstream device (840), receiving the outgoing sheet stream (525) for the processing thereof; and a control unit (900), comprising at least one memory, one microprocessor, one database (910), and a software for managing the stream of documents, which receives data related to the reading of the identification codes from the reading device; which provides information, extracted from said database (910), to the upstream and downstream devices (810, 840) for the correct processing and delivering of the sheets; and Which controls the release of the outgoing sheets from the buffering device (100) with a timing synchronized with said downstream device, where the method performed by that apparatus from an upstream device to a downstream device facilitates the coupling of any item with documents as accompanying paper support.

## Description

The present invention refers to an apparatus for the processing of documents with a dynamic buffering, wherein documents are essentially meant to be individual sheets on which at least one respective identification code is printed or shown for the execution of the processing steps referred to the documents themselves, through the apparatus.

The apparatus for processing generally includes an upstream device operating the function of supplying documents in individual sheets, then sending them along a conveyor line; the apparatus also includes a downstream device, receiving the flow of sheets to be processed further.

The dynamic buffering method for processing documents is related to the processing of documents aimed to the coupling thereof with other items, such as cards, which in turn have a univocal identification code

The apparatus and method defined above can be used in many areas. By way of example, reference is made to the production and direct mail of cards on a paper support, generally consisting of either a flat or a folded sheet, on which all the required data are shown, already printed on them.

It is known that the direct mail is an important tool for businesses to communicate with customers, and then to satisfy the need of distributing cards by mail, such as debit or credit cards, business cards, identification documents like ID cards or driving licenses, or membership cards as well, to individual recipients.

These cards may be personalized or sent in a single package, combined with other inserts or mailer components, inserted in an envelope addressed to the appropriate recipient, all of which makes the preparation of such dispatch very labour-intensive and demanding.

Here and hereinafter, under the term "card" a substantially stiff card is meant, basically with rectangular shape, made of plastic or other plasticized material, possibly including identifying information, biometric data, pictures, alphanumerical characters, QR or bar codes, ICAO MRTD or eMRTD readable characters, RFID or NFC tags and magnetic strips.

This kind of card usually has a format defined according to ISO standard 7810, 7811, 7813, 7816, 14443 or a format A7, A8, B7, B8, C7, C8 according to ISO standard 216. This kind of card format can even be used for magnetic or optical memories, toy cards, collection cards, badges, access keys for smart locks etc. All these items fall within the definition of "card".

The extent of the apparatus and method described here encompasses any type of article which can be identified by a respective univocal code thereof, and which requires a paper support operating as an accompanying document.

In this context, the upstream device supplying the documents with their identification code generally are digital printers, while the downstream devices can be devices for folding the sheets, for coupling them with one or more cards, or possibly with other sheets, articles or information brochures and so on, and again devices for enveloping these sheets.

All digital printers that can be used for these applications have two important parameters to consider, the *Warm-up Time* and the *First Print Out Time.*

*Warm-up Time* is the time requested by print engine of the printer to boot up, i.e. to turn on and warm up, especially for laser printers needing a long period of time to bring all the electromechanical parts thereof up to temperature before starting the printing process. This period is required whenever the printer is in a *stand-by* state, which starts after a certain printer snooze time, with the purpose of saving energy.

Then, the *Warm-up Time* is not a fixed period of time, and may also include other checks provided by the printer management software, such as checking the ink levels or the presence of blank paper.

*First Print Out Time* (FPOT) is the period of time required by the printer to load the print instructions, which are used to generate the print of the sheet or sheets.

These two hold periods have an influence on the performance of the printer, which can also vary depending on the number of sheets to be printed.

Using an example, we can assume that we have a laser printer having a printing speed of 1 sheet per second, a *Warm-up time* of 10 seconds and an FPOT of 8 seconds starting from the end of said *stand-by* state.

If a computer connected to the printer sends instructions to print 60 documents, the total time to have all the sheets printed will be the sum of the 10 seconds of *Warm-up Time* plus 8 seconds of FPOT and 60 seconds for the actual printing of the documents, or 78 seconds total. The average for each document is therefore 1.3 seconds per sheet, but, if the number of sheets to be printed had been less, for example 10 sheets, the total time would have been 28 seconds, with an average of 2.8 seconds per sheet.

So, the smaller the number of sheets required, the higher the average time to get each sheet printed.

In the context of the direct mail of cards, other factors come into play: the generally known and applied processes involve reading the microchip of the card, or its magnetic strip, or in any case any univocal code imprinted on it or obtainable from it, to extract, through a search in a database, a record of data univocally referring to the cards, including, for example, name, family name, recipient's address and more, which will allow the sheet to be printed then to be univocally combined with the card.

Assuming to use the printer of the previous example, and assuming to read a univocal code of one card per second, the control unit handling this process will be able to send a printing instruction per second to the laser printer, with a minimal initial delay for accessing the data on a server.

In one minute, the control unit will then elaborate 60 distinct printing instructions, each requiring an FTOP to be processed, plus an initial *Warm-up Time*: for a group of sixty cards, sixty documents will then be printed in a period of time equal to *Warm-up Time* plus 60 times FTOP, then 490 seconds to complete the printing of all sheets, with an average of 8.17 seconds per document.

It can be concluded that, in this case, the FPOT is the parameter that most influences the timing of the process, and it is understandable that this procedure is not sustainable.

A more advantageous procedure would be, for the cards of a group of N cards, for example 60 cards, to be read consecutively in a row, providing for each of them the individual printing instructions of each respective document accompanying the control unit.

The latter could gather all these printing instructions into a single overall printing instruction and send it in a single solution to the printer, which would execute the print after waiting for a *Warm-up Time* and a single FPOT.

In this way, the overall time would be reduced to 60 seconds for reading the cards, plus 18 seconds of *Warm-up Time* and FPOT plus 60 seconds of printing: 138 seconds against 490 seconds of the previous example, and with an average of 2.3 seconds per document, calculated however from the instant in which the reading phase of the univocal codes of the cards is started.

In general, it can be concluded that the most costeffective technique is to carry out multiple readouts of individual cards and then gather the respective printing instructions into a single file to be sent to the printer.

However, in this scenario, the rapid output of printed sheets may not be compatible with the processing speed and/or frequency of the downstream devices, and this requires the use of a buffering device between the upstream device and the downstream device(s) that is configured to accumulate the sheets output by the upstream device. and to release them with a timing synchronized with the operation of the downstream devices, possibly with an ondemand release of a downstream device mediated by a control unit.

In this context, a first purpose that the buffering device should fulfil is to accumulate the sheets delivered by the printer and then to send a individual sheet to the next stations at the desired time, possibly upon request.

In this regard, it should be noted that printers have their own firmware and software that cannot be modified, and that determine the FPOT, which cannot therefore be controlled.

This is obviously not compatible with the subsequent operations which, even in the context of automation, may require pauses, interruptions, accelerations and stops.

A second purpose to be satisfied could consist in providing a vertical rather than horizontal accumulation of the individual sheets dispensed by the upstream device, for obvious reasons of space: the need of increasing the number of sheets waiting to be processed makes to use a linear accumulation device on a tape impractical.

A further issue to be aware of arises from the sheets delivered by an upstream device, in particular a laser printer, being heated and having a certain level of electrostatic charge.

These circumstances do not involve excessive complications in the stacking of the sheets, provided that this operation is carried out by dropping them from the top, but this would imply that the extraction of the individual sheets from the stack of sheets must take place from the bottom of the stack.

However, if the aim is to buffer more sheets, then the weight of the stack could become a crucial factor in the efficiency of the extraction, together with the high temperature of the sheet and its electrostatic charge. In fact, in addition to the weight loaded on the bottom sheet, the other two factors may also make the extraction force requested to extract the individual sheet from the bottom unpredictable, with the result that the sheet could tear, or that an excessive force could drag two or more sheets instead of just one, undermining all the subsequent operation steps.

Thus, the present invention is related in particular to a document feeding system incorporated into the apparatus for processing, referred to as a buffering, to highlight the dynamic buffering allowing individual sheets of paper to be handled, collecting them together in a vertical stack suitable for feeding a subsequent document processing device.

In general, the buffering device comprises an inlet section receiving individual sheet to be buffered according to a certain sequence, an outlet section to release individual sheet according said sequence, and an operation space therebetween, apt to provide one buffering stack of sheet received from the inlet section.

As mentioned above, the sheets to be buffered may be released by upstream devices of various kind, including a printer, a paper press, a stamping machine, or by an equivalent device.

This stack of sheets is used to feed a downstream device with sheets according to a required sequence. Again, the sheets may be supplied to devices of various kind, including further printers, enveloping or packaging equipment, and any other device apt to receive and operate on individual sheets in a sequence.

As explained above with reference to the direct mail of card, The known buffering systems may show a considerable difficulty in handling upstream and downstream devices having different output and input frequencies and rates, or in the managing of discontinuous operation, because they produce a stack by placing the incoming sheets, i.e. the sheets released by the upstream device, e.g. a digital printer, simply at the top of the stack.

In addition, other factors may worsen the extraction process: e.g. the paper quality and the surface treatments of the sheets. The paper frequently receives a lining through toners inks from digital printers which can vary in quality. Another factor which may affect the extraction of the bottom sheet is the fibre orientation of the paper itself, which could change the friction coefficient to be considered.

The devices usually operated to carry out the extraction of the single bottom sheet are typically friction or suction-based drag devices.

In the friction-based devices, rubbery rollers are typically used beneath the stack, but the friction generated on the surface of the bottom sheet may shift other sheets above, or even extract more sheets together; for this reason, further friction rolls must be involved at a calibrated distance, to allow the movement of an individual sheet having a certain thickness.

The suction-based devices are similarly operated through suction cups or suction wheels, achieving a suitable drag only on the bottom sheet to be extracted; the suction is mainly used when processing coated sheets which may have an unpredictable surface friction coefficient, which could severely affect the operation of the friction rolls.

However, suction could not properly work when the paper has a strong surface porosity, which would increase the force requested for the sheet to be gripped by the suction cups or wheels.

In any case, the frictional force used for the sheet extraction may vary due to the presence of paper fibre debris, dust, impurities, ink or scattered coating, humidity absorbed from the atmosphere, electrostatic forces produced through the paper sliding, presence of glue, vacuum effect between very smooth coated surfaces of adjacent sheet and so on.

Summarizing, these unwanted drawbacks can cause various malfunctions in the operation of the buffering systems, like feeding two or more sheets instead of an individual sheet, or not feeding the sheet at all, even after a few consecutive extraction attempts.

Usually, the operator working with these devices constantly adjusts their parameter to limit malfunctions and production losses. The most frequent operation that the operator performs is to increase or decrease the distance between the fixed element and the extraction members such as friction wheel or suction members, to create an opening for the passage of one individual sheet only, but the sheet thickness is about 0.1 mm, then this adjustment is particularly complicated.

Further, a deformation of the sheet may occur during the extraction operation, especially at high speed, as the sheet is made of a flexible material and the application of the extraction force takes place on some areas of the surface of the sheet itself, causing a micro-waving, i.e. small creases or ripples. They may cause the thickness of the sheet to consistently vary, especially when recycled papers or less expensive papers, deriving from simpler and more eco-sustainable processes, are used instead of highquality calibrated papers.

The technical problem underlying the present invention is to provide a dynamic buffering apparatus for processing documents which may overcome the drawbacks cited with reference to the prior art.

This problem is solved by a apparatus for processing documents as specified in appended claim 1, and further details of the present invention can be found in the dependent claims.

In preferred embodiments of the invention, the dynamic buffering apparatus for processing documents preferably comprises, in addition to the upstream and downstream devices already mentioned in the preamble, a individual sheet buffering device, which achieves an accumulation of sheets in the form of a vertical stack of sheets, in which the last incoming sheet is placed below the stack at the bottom thereof, and where the first single outgoing sheet is released from the top of the sheet stack forming an outgoing sheet stream.

In addition, this device comprises a reading device scanning the identification code of the passing-through sheets delivered by the buffering device.

Further, a control unit is provided comprising at least one memory, a microprocessor, a database, and a software for the management of the document flow, which receives the data coming from the scan of the identification codes by the reading device.

The control unit is therefore configured to provide the upstream and downstream devices with related printing and processing instructions elaborated from data searched through said database, for the correct issuance and processing of the sheets, and release requests for the sheets outgoing from the buffering device with a timing synchronized with the downstream device(s).

Referring to the example of the card direct mail, the information provided by the control unit to the upstream device like a printer comprises an overall printing instruction for a plurality of sheets corresponding to a respective number of cards, whose univocal codes generate said print instruction.

Some preferred embodiments of the apparatus according to the invention may provide, in the buffering device, an inlet section, fed by the individual sheets delivered by the upstream device; and an outlet section, from which the individual sheets forming said output sheet stream are released.

These two sections define an operation space between them.

The buffering device is then configured to form a buffering vertical stack of stacked sheets at a predetermined position within the boundaries of the operation space on a deformable supporting plane that slides under the buffering stack.

The above predetermined position identifies, on the supporting plane, a respective stack region and a free region belonging to the operation space, through which the sheets pass and in which the supporting plane and the incoming sheet are substantially deformed at the boundary between these regions, curving them downwards, so that the buffering stack is detached from the supporting plane, allowing the incoming sheet to be inserted beneath the buffering stack.

Some preferred embodiments of the apparatus according to the invention may further provide, in the buffering device, a drag device that is provided to operate on individual sheets at the top of the buffering stack, to pick up individual sheets from it, thus forming said stream of outgoing sheets.

In addition, the buffering device includes a flat bed conveyor which implements the sliding supporting plane, and which conveys the individual sheets one by one from the inlet section.

Finally, the buffering device also comprises a stop device that is placed at the end of the outlet section of the working space, to achieve the determined position of the buffering stack on the supporting plane, thus also achieving a respective stack area.

Another aspect of the invention concerns a method for the processing of documents, in particular for the generation of documents in the context of the card direct mailing procedures, involving the coupling of one or more cards with a respective paper support generated through a printing process starting from the reading of at least one univocal identification code in the card.

The method of document processing therefore involves a dynamic buffering, with the use of a buffering device.

This procedure involves a step of reading card univocal codes in a group of N cards; The univocal codes thus obtained are used to query a database that contains, for each card, a record with the data necessary for the card direct mailing to its holder, which must be reported on an accompanying document that operates as a paper support, to which the cards are eventually physically coupled in a special coupling station.

In a later step, the records from the group of N maps are used to generate a print instruction for each of the N maps in the group, and these print instructions are used to generate an overall print instruction for the documents in all the N maps in the group.

The overall print instruction is used to print N documents on which a respective identification code is imprinted; the N documents are then sent to a buffering step wherein they are piled up in a stack of individual sheets arranged one on top of the other, in which this stack of sheets is arranged on a deformable supporting plane.

The buffering step is carried out by deforming said supporting plane and inserting the incoming sheet beneath the stack of sheets, as the lowest sheet of the stack, and so on for each incoming sheet.

The processing method then comprises a subsequent feeding step on request of a processing device placed downstream the buffering stack, wherein the release of sheets takes place by picking a sheet up from the top of the pile.

Subsequently, a reading step is provided for the identification code of the released sheets, which then are conveyed to a coupling station between the sheet and the corresponding card, with a coupling that is carried out based on the identification code shown on the sheet and the univocal code that identifies the card.

Therefore, the main advantage of the present invention lies in allowing the buffering stack to store an amount of temporarily buffered sheets contained depending upon the spread between the release and the pick-up frequencies of the upstream and the downstream devices respectively.

Generally speaking, the apparatus of the present invention greatly improves the operations of extracting one individual sheet from a buffering stack, because the outgoing individual sheet is always pulled out at the top of the stack and the incoming sheet is always inserted beneath the stack, ensuring that the extraction of any sheet takes place always at the same conditions, even when the number of buffered varies, making the extraction independent upon the weight of the stack.

As a matter of fact, this way of extracting sheets from the paper stack involves the mandatory requirement of inserting all the incoming sheets from the upstream device beneath the stack.

The present invention will be described hereinafter according to one preferred embodiment thereof, provided for illustrative and non-limiting with reference to the attached drawings wherein:
* Figure 1 shows a schematic representation illustrating the operation of a buffering stack in a dynamic buffering apparatus for processing documents according to the present invention;
* Figure 2 shows another schematic representation of the operation of the buffering stack of Figure 1;
• Figure 3 shows a partial plan view from above of a dynamic buffering apparatus for processing documents according to an embodiment of the present invention;
• Figure 4 shows a perspective view of the apparatus for processing documents in Figure 3;
* Figure 5 shows an axonometric side view of a buffering device incorporated in a preferred implementation of a dynamic buffering apparatus for processing documents according to the present invention;
* Figure 6 shows an axonometric opposite view of the buffering device of figure 5;
* Figure 7 shows an axonometric side view of the buffering device of figure 5 in a different operational configuration thereof;
* Figure 8 shows an axonometric view of the inner parts of the buffering device of figure 5;
* Figure 9 shows the inner parts of the buffering device of figure 5 in a reverse axonometric view;
* Figure 10 shows a side view of the buffering device of figure 5;
* Figure 10A shows the axonometric view of a detail of the buffering device in figure 10;
* Figure 11 shows an axonometric view of the inner parts of the buffering device of figure 5 with a sheet passing therethrough;
* Figure 12 shows the axonometric side view of the inner parts of the buffering device of figure 5 highlighting a detail of the inlet section thereof, seen from below;
* Figure 13 shows the axonometric view of the detail of figure 12 seen from above;
* Figure 14 an axonometric view of a detail of the outlet section of the buffering device of figure 5, while Figure 14A shows the position of this detail at said outlet section of the buffering device;
* Figure 15 shows a side view of the detail of figure 14;
* Figures 15A and 15B show an axonometric view of a magnified part and a cutaway view of the detail shown in both figures 14 and 15; and
* Figure 16 shows a block diagram illustrating a method of dynamically buffered document processing carried out by the apparatus in Figure 3.

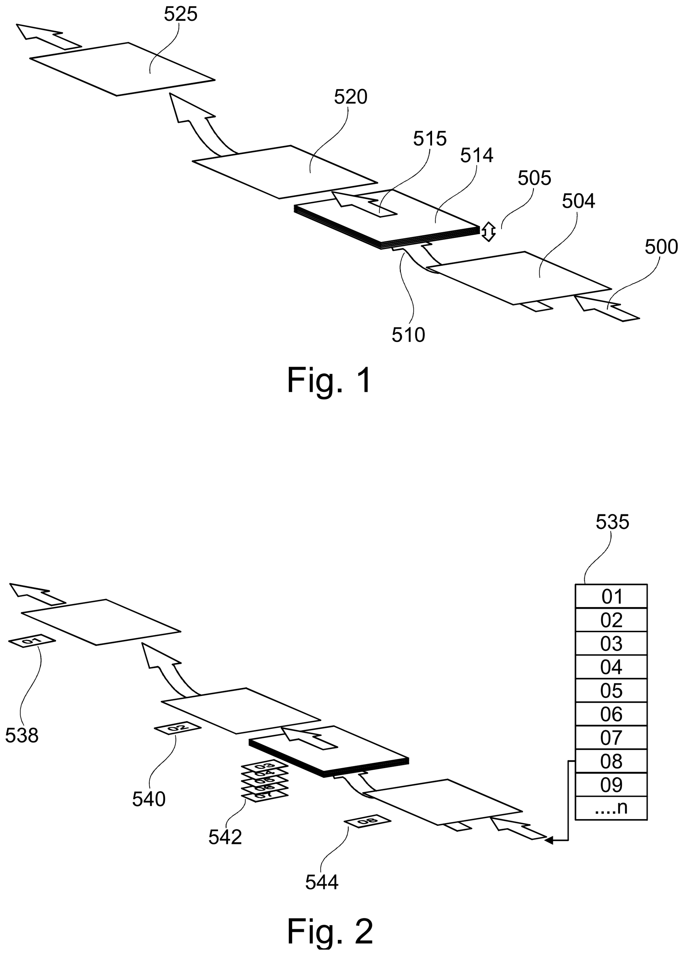

With reference to Figure 1, the operation of the buffering device that is incorporated in the dynamic buffering apparatus for processing documents of this embodiment of the invention described here is schematically described. The purpose of the device, which will then be described in detail, is to collect and gather sheets 504 released form an upstream device according to a release direction 500; the upstream device (not shown) releasing sheets to be gathered may be a sheet feeder, a printer or another equivalent device producing a document output.

The collecting of sheets 504 achieves a buffer of sheets 505 in the form of a sheet stack 514, wherein the last incoming sheet 510 is placed beneath the stack, i.e. at the base thereof, and wherein the first outgoing individual sheet 520 is always supplied to a downstream device from the top of the stack along an output direction 515, forming a flow of outgoing sheets 525.

It is understood that the single released sheet will always be placed beneath the existing stack, while the firstly processed released sheet is simply placed at an empty stack area, to be later picked up from the top of the stack.

Figure 2 represents a sequence of customized documents, i.e. a document flow wherein each sheet is identified by a univocal code; the table 535 represents the sequence of sheets that will be fed by the upstream device. In the example, the codes are shown starting from sheet 01 and sequentially 02, 03, 04, 05, 06, 07, 08, 09... n. This sequence can be found observing the incoming sheet code 544, the buffered codes 542, the outgoing code 540 and the supplied code 538 of the document flow in figure 2.

Since the number of sheets contained within the buffer height 505 depends upon the differential between the release frequency of incoming sheets and the pick-up frequency of outgoing sheets, the dynamic buffer described so far overcomes the problem of managing two machines with different production rate which cannot be instantly controlled.

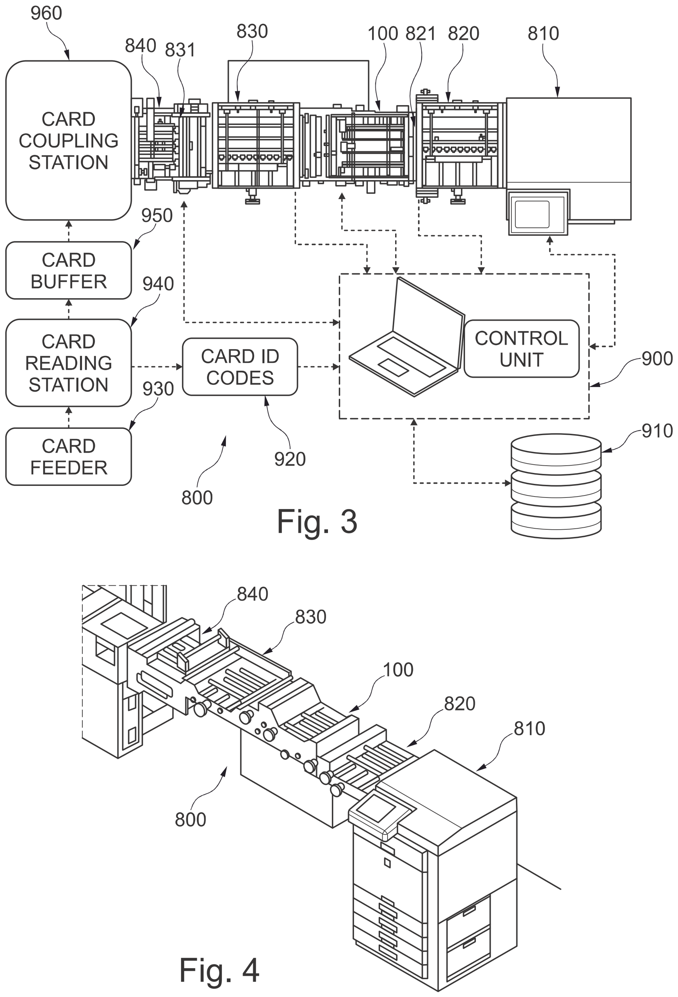

With reference to figures 3 and 4, an embodiment of a dynamic buffering processing apparatus is indicated by 800 as a whole: by way of example, it is referred to the field of the direct mailing of cards coupled to a paper support that constitutes the document being processed.

Thus, the apparatus 800 comprises an upstream device, specifically a laser printer indicated by 810, which delivers documents along a conveyor device 820 that feeds a buffering device 100, which will be described in more detail below, with individual printed sheets.

The conveyor device 820 can be of the flat bed type, with endless conveyor belts extended between pairs of pulleys, on which the sheets are transported horizontally, with an orientation that will be the same as the emission from the printer810, with an exposed face, on which the document will show an univocal code, such as an alphanumeric code, a barcode, a QR code or similar, clearly visible.

In this regard, the conveyor device 820 may include a preliminary reading device 821, which may be an optical sensor, a video camera and the like, or other types of sensors for reading codes that may include magnetic codes, RFID tags and so on.

The apparatus 800 includes a control unit 900, schematically depicted in figure 3, comprising one or more memories, at least one microprocessor, and some I/O interfaces that may include, according to a non-exhaustive list, wireless communication devices operating with Wi-Fi and/or Bluetooth protocols, digital data transmission ports, such as USB ports, keyboard, display, possibly *touch-screen,* pointing devices and others.

The memories shall include at least one operating system software and one software for managing the processing of, which may be loaded and/or updated through said communication devices and I/O interfaces.

The control unit 900 (figure 3) can be made up of a computer or a server; the memories can belong directly to the unit 900 or can be virtually built in the cloud communicating through a distributed data network, LAN or wireless network.

The memories also contain stored therein a database 910, which can be updated and implemented through the control unit or through other services, containing the records with the mailing data of the cards, together with all the identification data and the univocal codes of the cards themselves, and a register of identification codes that allow one or more cards to be coupled with a particular paper support for the direct mailing thereof, that will contain all the necessary postal delivery and enveloping data.

Conveniently, the database 910 will be protected, possibly in a blockchain environment, using a public distribution ledger.

With reference to figure 3 only, in the context of the direct mailing of cards and the like, the apparatus 800 includes a card feeder device configured for feeding cards in groups containing a predetermined number N of cards. The feeder 930 provides these cards through a reading station 940 which is set up to read univocal codes for each card of the N cards of the group that, from time to time, is provided by the feeder device 930.

The codes will be used to query, through the control unit 800, the database 910 using a packet 920 of univocal codes detected in N cards of a group of cards supplied by the feeder device 930 and through the reading station 940.

The cards of the group of N cards, e.g. fifty or sixty cards, possibly divided into subgroups, are then accumulated in a buffer device 950, ready to be progressively coupled with the respective paper supports, in a coupling station 960, which is fed both with the N cards of the group and with the respective N paper supports operating from accompanying and mailing documents, provided by the document apparatus 800.

The univocal codes of the cards can be also derived from the reading of the microchip of the cards, from their magnetic strip or from codes directly imprinted on the cards themselves, with a special reading device that communicates with the control unit 900, allowing it to query the databases 910 to obtain the mailing data to be printed on the respective paper support.

This mailing data may include, for example, the name of the recipient and the address where the document, card and envelope containing them must be delivered. In addition to the delivery address, a univocal code is usually printed in alphanumeric form and in the form of a barcode, QRcode or in other forms that can be read automatically by readers and special cameras.

Once the mailing data for all the N cards in the group have been obtained from the database 910, the control unit 900 will be able to process a print instruction, to be sent to the 810 printer, which gathers together all the print instructions that can be obtained through the individual univocal codes of each card, to minimize the printer's FPOT time period, allowing the printer to proceed printing all the documents that form the mailing paper supports for each of all the N cards, then conveying them along the conveyor device 820 which provides the buffering device 100 with them.

As it will be evident from the following description of the buffering device 100, the fed documents are collected in a stack that develops vertically, resting on a deformable supporting plane of the device 100.

In this way, the insertion of the incoming individual sheets takes place by deforming the supporting plane that holds the stack thereby allowing to insert the incoming sheet beneath the stack, i.e. as the lowest sheet, and so on.

In this process, the sheets need not to be overturned, and therefore they always remain with the same face, which is the one that contains the identification code, upwards.

Then, the sheets are fed from the buffering device 100 by picking the sheet to be supplied up from the top of the stack, and releasing it towards a subsequent conveyor line, keeping its position and orientation unaltered, although a slight misalignment of the sheet may occur during the conveying thereof.

In sequence, the apparatus 800 comprises an aligner device 830, which receives the sheets, upon request of the control unit 900, from the buffering device 100; The aligner device 830 provides the correct alignment of the sheets that allows a correct reading of the identification code shown on the sheet.

However, it is understood that alignment may not be strictly required for such a reading to be performed.

In this regard, the aligner device 830 comprises a main reading device 831, which may consist of an optical sensor, a video camera and the like, or other types of sensors for reading codes that may include magnetic codes, RFID tags and so on.

Subsequently, the apparatus 800 could comprise downstream a device 840 for the processing of documents which, in this specific case, could be a sheet folding device that prepare the sheets for the coupling thereof with the cards.

It will be noted that the readings of the reading devices 821, 831 are received and managed by the control unit 900, which is connected to and manages all the devices of the document apparatus for processing 800, in particular therefore the upstream device 810, the buffering device 100 to which the feeding of documents is controlled one by one, with a synchrony that depends on the downstream device 840.

Once the document has been processed by the downstream device 840, it can be sent to the coupling station 960 which is provided for the coupling with the cards supplied one by one by another buffer device 950; it is understood that this subsequent station could also constitute said downstream device.

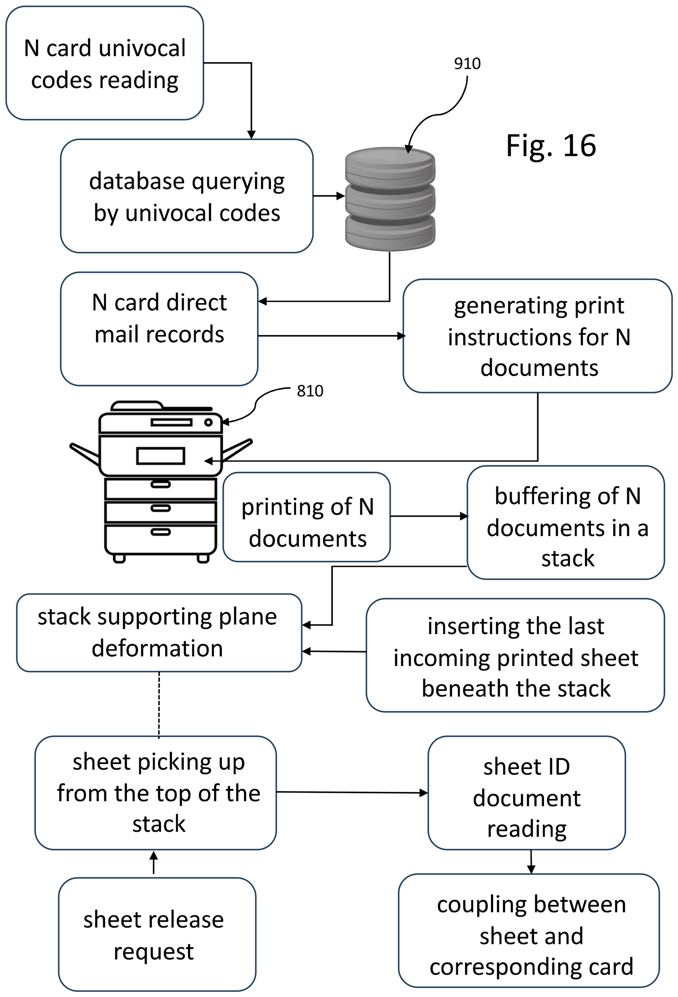

The method of processing documents and coupling documents with maps described here is illustrated in Figure 16 by means of a block diagram.

It is understood that this procedure may comprise further control readings of both the identification codes shown on the documents that operate as paper supports for the cards and the univocal codes that identify each card.

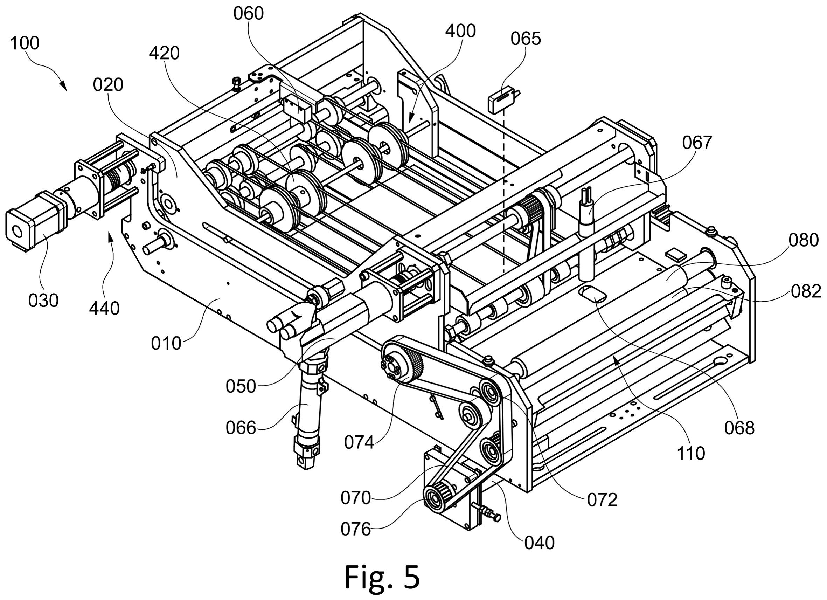

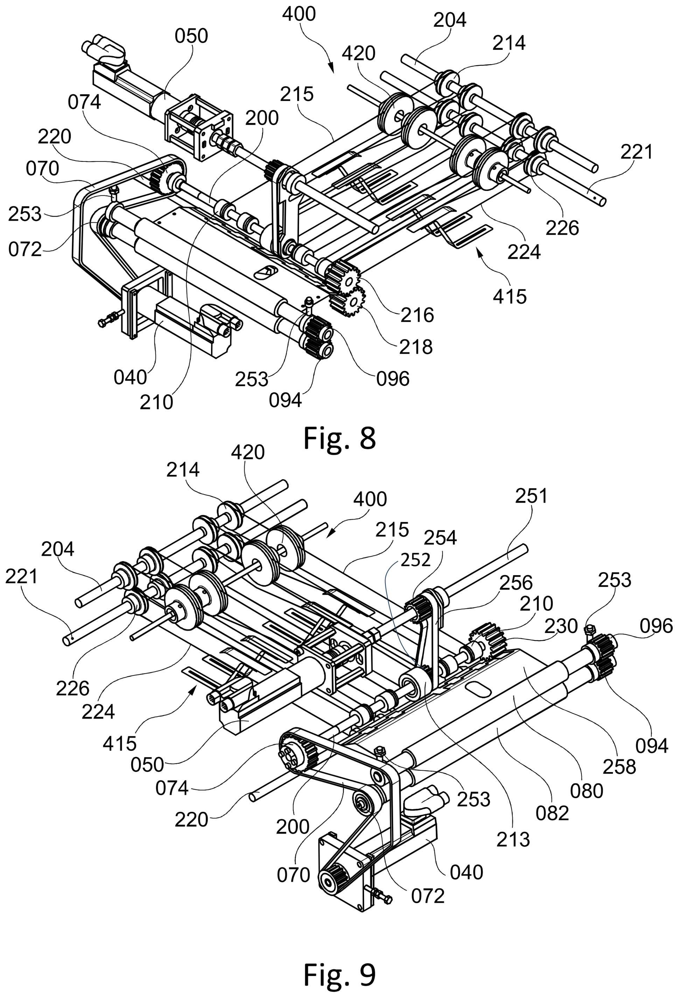

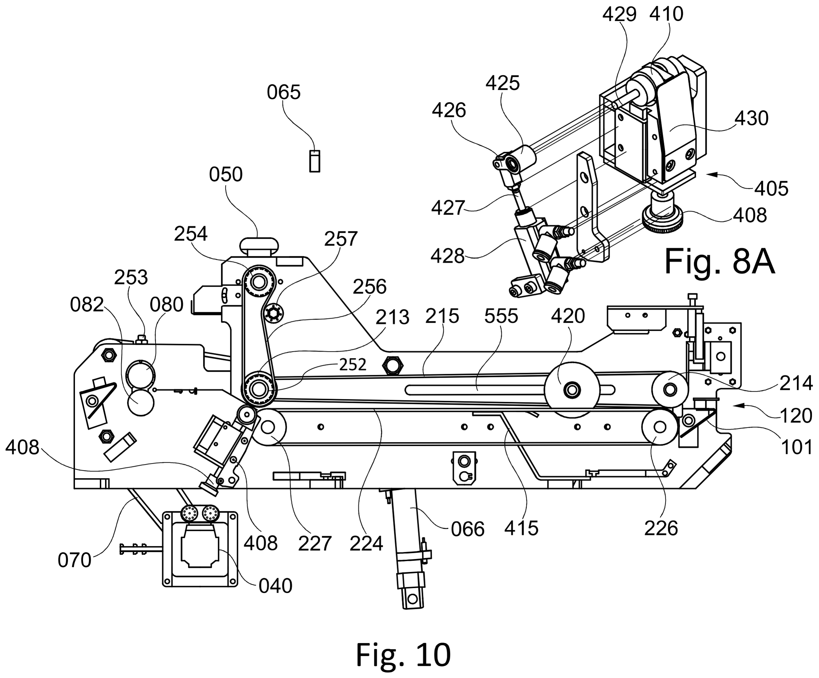

Figures 5, 6, and 7 show the whole buffering device 100 of the present embodiment. Then, figures 8, 8A, 9, 10, 10A, 11, 12, 13, 14, 14A, 15, 15A and 15B show more details and particulars of the whole buffering device.

This device 100 is substantially composed by two main structures: a base member 010 having a basically flat rectangular shape, which is mounted to a stable frame which is not shown in the drawings, possibly mounted on the ground floor, and a swivel member 020, having a basically flat and rectangular shape superimposed onto the base member 010, which can be rotated around a main shaft 200 integral to the base member 010 and rotatably coupling the base and swivel members 010, 020 to each other at the proximity one end of the swivel member 020.

In this regard, the main shaft 200 acts as a hinge shaft of a hinge coupling base and swivel member 010, 020, but it can freely rotate with respect to both, not affecting the possible rotation of the swivel member 020.

Both the base and the swivel members 010, 020 have a respective chassis having respective vertical side walls, which laterally limit the working space of the buffering device 100.

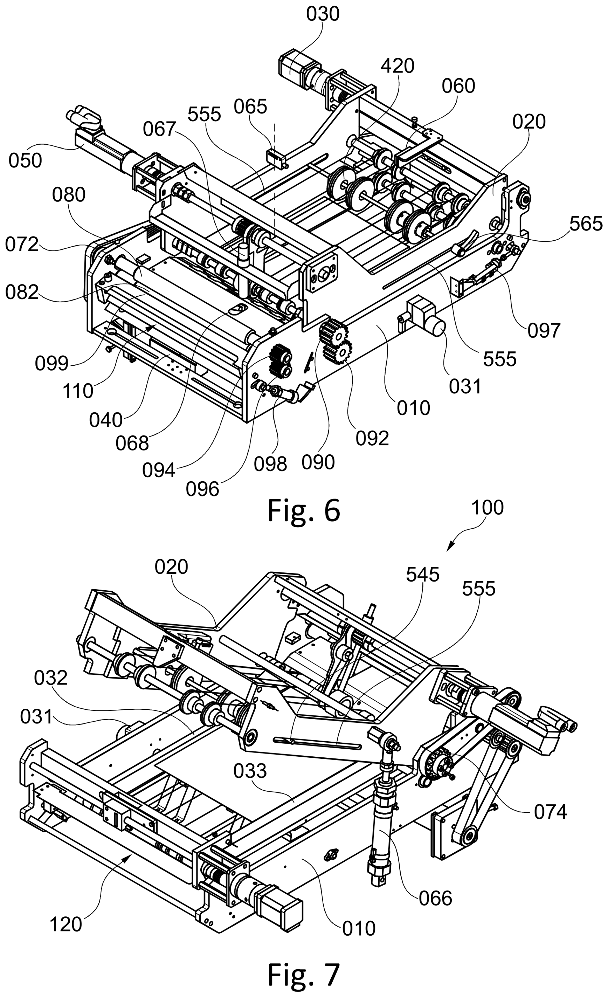

By rotating the swivel member 020, raising it from the base member 010, it is possible to access the buffering device 100 and in case manually remove the sheets inside. The opening of the device 100 can be automatically operated by an actuator which, in the present embodiment, is a jack 066 having an actuating rod moved along a direction substantially perpendicular to the base member 010 and having an actuator end which is journaled for rotation in bearing at one side wall of the swivel member 020 (figure 6).

In the normal working position, the buffering device 100 shows the swivel member 020 horizontally laying and parallel onto the base member 010.

The buffering device 100 has an outlet section 110, from which individual sheets are fed to a downstream device, and an inlet section 120, receiving upcoming sheets of a document released by an upstream device. In this connection, these sections 110, 120 define a sheet stream direction from the inlet to the outlet and inside said working space, and the above-described sheet stack 514 is meant to be formed and held between the inlet and the outlet in a predetermined position within said working space, the inlet and the outlet sections 120, 110 being conveniently spaced to set up an intermediate stack area 506, having an extension corresponding to the sheet length, i.e. to the sheet extension along sheet stream direction, or even a little longer than the sheet length.

It is understood that the stack area extension may depend upon the sheet orientation.

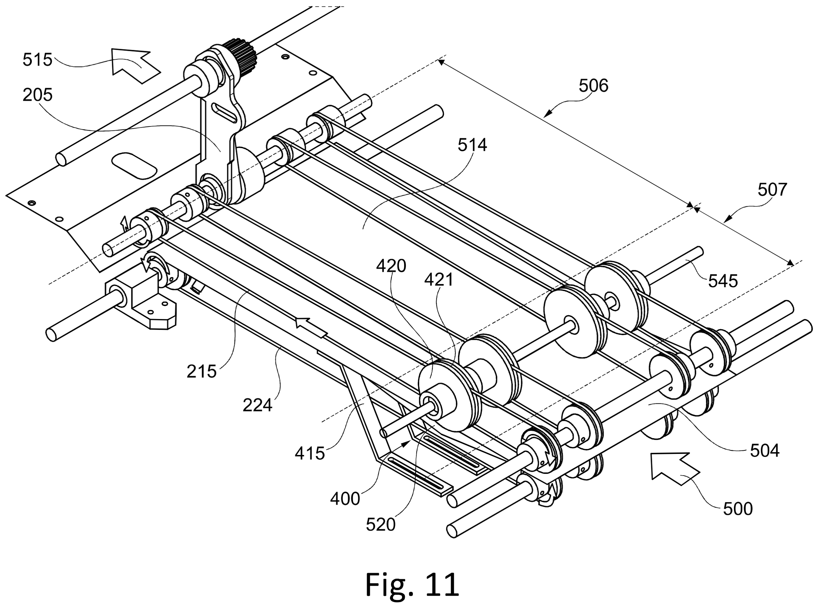

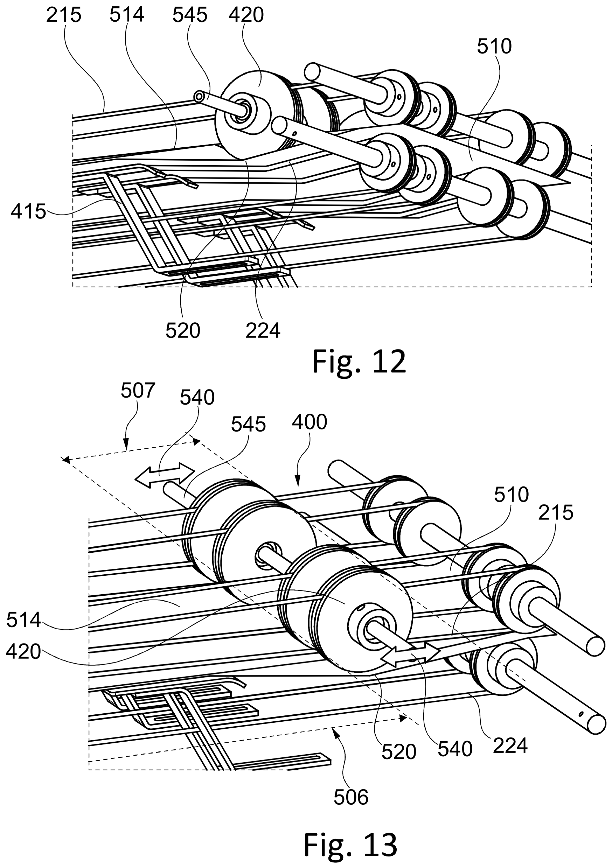

According to the present invention, the stack area 506 in said working space is placed closer to the outlet section 110, to leave a free area 507 between the stack 514 and the inlet section. Accordingly, the insertion of the upcoming sheet 510 beneath the stack 514 takes place at the boundary between the free area 507 and the stack area 506. The boundaries and the respective lengths of the stack area 506 and of the free area 507 are visible in Figures 11 and 13.

Since the extension of the stack area 506 may vary depending on the orientation and the size of the sheet, the extension of the free area 507 may vary accordingly: when the stack area 506 is shortened, the free area is 507 extended and vice-versa.

The main shaft 200 is located at the outlet section 110.

In the buffering device 100, an extraction motor 040 is positioned beneath the base member 010, having the purpose of driving suitable rollers to handle individual sheets at an outlet section 110 of the buffering device 100.

In particular, the extraction motor 040 comprises a drive gear 076 on the base 010 to drive a transmission belt 070 following a path defined by further tensioning idle wheels journaled for rotations in respective bearings mounted onto a respective side wall of the chassis of the base member 010, to finally rotate a first tail wheel 072 and a second tail wheel 074 in a synchronous way. To accomplish this purpose, the transmission belt 070 and the tail wheels 072, 074 may be advantageously toothed.

The first tail wheel 072 is integral to the end of a respective rotating shaft extending across the width of the base member 010, having a corresponding first pinion 094 at the opposite end, engaging a second pinion 096 integral to the end of another rotating shaft which is apt to rotate driven by the first pulley 072.

These two shaft, both being journaled for rotation in bearings mounted on opposite side walls of the chassis of the base member 010 at said inlet section thereof, are parallel and in close contact to each other: they implement a pair of extracting rollers, namely a first sheet extraction roller 080 driving, through said pinions 094, 096, a second sheet extraction roller 082.

To this purpose, the surfaces of the two rollers 080, 082 are coated with a rubbery material increasing their grip on the paper constrained between the two roller surfaces which are in mutual contact.

Any suitable bearing can be used for supporting said shafts, including for example slide bearings.

The rollers 080, 082 are positioned to let a sheet extracted from a sheet stack pass through them, namely the outgoing sheet 520 at the top of the stack 514, once a drag device has moved this sheet from its starting position at the stack, shifting the frontal edge of the sheet towards the rollers 080, 082. The drag device will be detailed hereinafter.

To compensate the thickness of the sheet passing between the two rollers 080, 082, the upper first roller 080 is substantially sprung by means of two spring members 253 (see figure 9) acting on the two ends thereof. The spring member 253 consist of a preload spring, and a spring adjustment screw with a locking nut are provided to adjust the preloaded elastic force. The second roller 082, placed beneath the first roller 08, is idle and it provides a contrast to the sprung upper first roller 080.

The second driving wheel 074 drives said main shaft 200 having a series of first drive pulleys 210 mounted thereon; in particular, the present embodiment shows four first drive pulleys spaced along the main shaft 200 to draw respective first conveying belts 215, preferably round belts (see figure 8) and made of a rubbery material to produce a friction when they contact the surface of a sheet.

Since the first and the second drive wheel 072, 074 have different diameters, the first extraction roller 080 and the main shaft 200 are driven at different spin rates.

In the present case, since the diameter of the first drive wheel 072 is shorter than the diameter of the second drive wheel 074, the first extraction roller 080 spins at a much higher rate with respect to the main shaft 200 and to the first drive pulleys 210.

The first conveying belts 215 are endless and follow a respective annular path extending across the length of the base member 010, making them endless belts, being wounded around corresponding first tail pulleys 214 mounted on a first tail shaft 204 in turn journaled for rotation in bearings mounted on respective side walls of the chassis of the swivel member 020, at the opposite end thereof, i.e. at the inlet section 120 of the buffering device 100, to have the conveying belts 215 placed above the paper sheet stack 514 located between the base and the swivel member 010, 020, where the sheets are temporarily stored.

Since the main shaft 200 and the first tail shaft 204 are parallel to each other, both the tail pulleys 210, 214 being substantially spaced in positions corresponding to each other along their respective shaft 200, 204, all the first conveying belts 215 run parallel to each other, each of them forming a respective lower and upper leg; while both the lower legs and the upper legs lie on respective distinct planes.

According to the above arrangement, the lower legs of the first conveying belts 215 are placed to be in contact with the upper surface of the sheet at the top of the respective stack arranged between the base and the swivel members 010, 020, thereby the conveying belts 215 can draw the top sheet addressing it to the extraction rollers 080, 082. In this connection, the conveying belts 215 form, together with all the driving members thereof including the respective drive and tail pulleys, the above-mentioned drag device, indicated as 090, of the buffering device 100.

However, it is provided that the dragging force exerted by the first conveying belts would not be enough to effectively drag the top sheet towards the extraction rollers 080, 082. In this connection, it is noted that the extraction motor 040 is continuously operated making both the rollers 080, 082 and the first conveying belts 215 continuously run, while the sheet must be extracted discontinuously and on demand only.

The drive pulleys 210 may have a diameter equal or even smaller than the tail pulley diameter, to possibly decrease the grip operated on the stack of sheets there below. If the drive pulleys have a smaller diameter, the plane identified by the lower legs of the conveying belts 215 has an inclination with respect the plane on which the sheets lie.

In this connection, the conveying belts 215 arranged the above detailed inclined trajectory causes a pressing force onto the surface of the top sheet which is higher at the rear edge of the sheet and progressively decreases towards the front of the buffering device 100, closer to the extraction rollers 080, 082.

Further, it should be noted that the gradient of such a decrease produces a belt friction which is roughly inversely proportional to the diameter of the drive pulleys 210.

Since the height of the stack 514 may vary to include a predetermined top number of sheets, e.g. fifty, a height adjusting device can be provided to adapt the level of the first conveying belts 215, otherwise the first conveying belts 215 may be pressed against the top sheet of the stack 514 with a pressing force slightly varying upon the stack height 505, without significantly altering the operation of the buffering device 100. The height adjusting device of the present embodiment will be detailed hereinafter.

Since the task of the drag device 090 is shifting an individual sheet from the stack top to the extraction rollers 080, 082, at least one additional friction wheel 213, actively rotating, is provided to push said individual sheet towards the outlet section 110, the at least friction wheel 213 being placed at a level whereby it intersects the trajectory of the running frontal edge of the outgoing sheet 520.

In the present embodiment, just one friction wheel 213 is provided on the main shaft 200, having a rubber coating to improve its friction with the sheet surface, mounted by a bearing to let it rotate.

However, this friction wheel 213 is coupled with and eventually drawn by a further possibly toothed pulley mounted on the main shaft 200, namely a first service pulley 252, idle and free to rotate around the main shaft 200, which is engaged with a corresponding second service pulley 254 which is possibly toothed too, and it is located above the main shaft 200, mounted on a service shaft 251 which is in turn rotatably driven by a first service motor 050 of the buffering device 100.

The engagement between the first and the second service pulleys 252, 254 is provided by a suitable service belt 256, even possibly toothed to provide a synchronized engagement, in cooperation with a further tensioning wheel 257.

Both the first service motor 050 and the service shaft 251 are supported by the swivel member 020, and they possibly follow the rotation thereof.

Considering the above-described powertrain of the friction wheel 213, the latter can be rotated at a spin rate which is not linked to the spin rate of the main shaft 200. In any case, since the diameter of the friction wheel 213 is a little wider than the diameter of the first drive pulleys 210 then, even if the friction wheel 213 and the main shaft 200 have the same spin rate, the peripheral speed of the friction wheel 213 would be higher than the dragging speed of the first conveying belts 215. However, the extraction speed controlled by said extraction rollers 080, 082 is higher than this dragging speed.

To this purpose, the friction wheel 213, and therefore the overall operation of the drag device 090, can be disengaged linking a disengaging device to the friction wheel, e.g. a freewheel.

Then, the second service pulley 254 is mounted on the service shaft 251 by a freewheel embedded within the pulley body, acting as an overrunning clutch to disengage the second service pulley 254 and the service shaft 251 when the pulley is rotated faster than the shaft.

Hence, in the normal operation, since the first service pulley 252 is not engaged with the main shaft 200, the spin thereof is controlled by the first service motor 050 through the service shaft 251, the second service pulley 254 and the service belt 256.

In this connection, in the normal operation, the first service motor 050 is used to promote the movement of an outgoing sheet on demand, by enhancing its travel speed, so that the sheet is then drawn by the first upper conveying belts 215 towards the extraction rollers 080, 082.

However, when the rollers 080, 082, spinning at a higher rate, catch the running front edge of the sheet drawn by the conveying belts 215, the speed of the sheet is suddenly increased, and the friction of the friction wheel 213 may tear the paper. For this reason, when the spin rate of the first service pulley is increased accordingly, the second service pully 254 is automatically disengaged by the freewheel from the service shaft 251, thereby the spin rate of the friction wheel 213 could increase without tearing the paper.

Hence, a control unit is provided to trigger the operation of the first service motor as a response of the operation of any kind of downstream device handling the sheets buffered by the present device, operatively disconnecting such release from the releasing frequency of any upstream device. Otherwise, such a trigger may directly come from the downstream device itself.

Beneath the plane identified by the lower legs of the first conveying belts 215, and below the buffering stack of sheets, a supporting plane is provided for bearing the variable weight of the stack 514.

According to the present invention, the supporting plane is movable, and it slides under the stack 514 keeping it in a fixed position imposed by a stop device 405 at the outlet section 110 of the buffering device 100.

Further, this movable supporting plane is deformable, to be bent and curved downward at the boundary between the free area 507 and the stack area 506.

In this connection, a flat bed conveyor is provided, forming a deformable supporting plane, thereby the supporting plane slides beneath the buffering stack 514. At the same time, the flat bed conveyor further transports one by one incoming individual sheets released by an upstream device through said inlet section 120 of the present buffering device 100.

As a matter of principle, said flat bed conveyor may be selected from several different conveyors, including slat conveyors, chain conveyors, roller conveyor and belt conveyors as well. All these kinds of conveyor can provide a deformable supporting plane. The deformation of the supporting plane may be achieved by suitable guides engaging the running side edges of the plane, possibly also engaging the side margins of the transported sheets to curve both the plane and the sheet at the same time.

In preferred embodiments of the invention, the supporting plane is elastically deformable, to be curved and bent by a pressing device acting on the sheet in transit and on the supporting plane. In this connection, the running members of the conveyor may be mounted on elastic holder, to make the supporting plane elastically deformable.

In further preferred embodiments of the invention, the supporting plane is flexible and elastic, and it can be curved and bent by a pressing device acting on the sheet in transit and on the supporting plane. The kind of conveyor including such a flexible supporting plane may comprise flat belt conveyors, string belt conveyors, strap belt conveyors and round belt conveyors, all including one or more endless belts which may be locally bent and curved by a pressing device.

In the present embodiment, a belt transport is provided beneath the stack 514, at the base member 010, preferably a round belt transport made by round belts or O-ring belts, comprising a series of second conveying belts 224 run by an additional drive shaft and by further drive and tail pulleys.

In this connection, at the opposite end with respect to the second driving wheel 074, the main shaft 200 comprises a third pinion 216 which is engaged with a fourth pinion 218, placed at a lower position, in turn driving a control shaft 220 supported by the base member 010. Since the third and the fourth pinions 216, 218 are always engaged, the extraction motor 040 controls the rotation of both the extraction rollers 080, 082 and of both the main shaft 200 and the control shaft 220.

The end of the control shaft 220 opposite to the fourth pinions 218 is supported by the chassis of the base member 010; the main and the control shafts 200, 220 are close and parallel to each other.

The mutual position of the main haft 200 and of the control shaft 220 is determined by a stiff spacer 205 by which both the shafts are supported (see figure 11).

The control shaft 220 comprises a series of second drive pulleys 227 mounted thereon; in particular, the present embodiment shows four second drive pulleys 227 spaced along the control shaft 220 to draw respective second conveying belts 224.

A second tail shaft 221 is provided, placed at the first tail shaft 204 and supported by the base member 010.

The second conveying belts 224 follow a respective annular path extending across the length of the base member 010, being wounded around corresponding second tail pulleys 226 mounted on said second tail shaft 221 journaled for rotation in bearings mounted on opposite side walls of the chassis of the base member 010, at the opposite end thereof, i.e. at the inlet section 120 of the buffering device 100, to have the second conveying belts 224 placed below the paper sheet stack.

Since the control shaft 220 and the second tail shaft 221 are parallel to each other, the second driving and the tail pulleys 227, 226 being substantially spaced in positions corresponding to each other along their respective shaft 220, 221, all the second conveying belts 224 run parallel to each other, each of them forming a respective lower and upper leg, while both the lower legs and the upper legs lie on respective distinct planes.

Accordingly, said second conveying belts 224, and in particular the facing upwards upper legs thereof, realize a flexible and planar supporting plane running from the inlet section 120 to the outlet section 110 of the buffering device 100, which is part of base member 010.

With respect to the positions of the first drive pulleys 210, of the first tail pulleys 214 and consequently of the first conveying belts 215, the positions of the second drive pulleys 227, of the second tail pulleys 226 and consequently of the second conveying belts 224 are staggered, i.e. placed at a determined side distance therefrom. Preferably, each second conveying belt 224 is centered between two adjacent first conveying belts 215, to maximize said determined side distance

All the conveying belts 215, 224 allow the individual input sheets to be conveyed into the buffer whereby a stack is formed. Since the above-mentioned side distance is adjustable, it allows to provide a controllable grip to the sheets comprised therebetween. In fact, if the upper first conveying belt 215 is distant from the corresponding lower second conveying belt 224, the stacked sheets contained between these belts will form small ripples parallel to the direction of the belts themselves, forcing them just to a limited extent, i.e. within the range of their elasticity. On the other hand, if the distance between the upper and the lower belts is reduced, a more pronounced rippling of the stack of sheets may occur, which will inevitably stress the belts.

Beneath the buffering stack, supporting members are provided for the bottom of the stack 514: at the middle of the base member 010, the buffering device has sliding supports 415, placed within the free spaces between the second conveying belts 224, bearing the weight of the stack in a position which is advantageously spaced from the inlet section 120 of the buffering device 100, i.e. not interfering with the free area 507, thereby allowing the deformation of the supporting plane and the insertion of an upcoming sheet beneath the stack at an intermediate position between the inlet section 120 and the rear edge of the stack, according the releasing direction 500.

Further, a control wheel 410 is provided at the friction wheel 213, acting upon the opposite surface of the sheet passing through them. Both the first and the second conveying belts 215, 224 contribute in keeping the stack of sheets in contact with the friction wheel 213 and the underlying control wheel 410.

The control wheel 410 is essentially placed at a predetermined position to provide contrast against the stack of sheets when the friction wheel 213 is activated to pull an individual sheet out of the stack. The peripheral surface of the control wheel 410 is placed at a predetermined distance from the peripheral surface of the upper friction wheel 213, this distance being slightly longer than the thickness of the sheet.

As a matter of fact, when the whole stack pushes against both the friction and the control wheels 213, 410 and the friction wheel 213 begins to rotate interfering with the surface of the first sheet at the top of the stack, the distance between the two surfaces of the wheels 213 and 410 must allow the passage of only one sheet, stopping all the others.

A stop wall 430 is provided at the control wheel 410 (figure 8A) having a tilted surface facing the stack, to provide an invitation to the stack of sheets to guide them between the two friction and control wheels 213, 410.

In this connection, both the control wheel 410 and the stop wall 430 implements a stop device 405 to retain the stack in its actual position, just allowing one individual sheet to be extracted from the stack at the top thereof, cooperation with the friction wheel 213 which promote this extraction, the extraction being completed by the extraction rollers 080, 082.

The distance between the friction and the control wheels 213, 410 may by finely adjusted by a micrometric screw inserted within the frame supporting the control wheel 410, operable by a first control knob 408, which moves the wheel 410 upwards or downwards, reducing or increasing said distance. Since the control wheel 410 is substantially stationary, i.e. not allowed to freely rotate, to prevent the wearing of its peripheral surface the control wheel 410 can be released, rotated and then locked again in another position.

Such a rotation can be automatized, allowing a certain reduced rotation after the passage of a certain number of sheets. In this connection, the buffering device is provided, at the base member 010, with a first linear actuator 428, whose movable rod 427 can be displaced forward acting on a lever 426 which causes the rotation of roll 425 which is integral with a control stem 429 which can achieve a small rotation of the control wheel 410. The roll 425 is equipped with a unidirectional joint thereby the stem can be rotated in one direction only, e.g. clockwise (figure 8A), while the rod is allowed to return in its starting position without any rotation of the control wheel 410.

The stop device 405 is thus arranged at the outlet section end of the working space, to determine the position of the buffering stack 514 onto the supporting plane, thereby also determining the position of stack area 506 which is filled by the buffering stack 514, and then the position of the free area 507, which in turn depends upon the size and the orientation of the stacked sheets.

The buffering device 100 is provided, at the inlet section 120, with a pressing device 400 to bend and press said elastically deformable supporting plane by exerting pressure on its upward facing surface (figures 11 and 13). At the same time, the pressing device is provided to press the incoming sheet 510 passing through the free area 507, thereby keeping the sheet 510 and the supporting plane, i.e. the second conveying belts 224, in close contact through the whole curve projection downward, determined by the pressing device 400.

The pressing device 400 comprises an intermediate shaft 545 which is slidably mounted on opposite side walls of the chassis of the swivel member 020 at said intermediate position between the inlet section 120 and the rear edge of the stack, i.e. substantially at the boundary between the stack area 506 and the free area 507.

In this connection, both said walls of the chassis of the swivel member 020 have a respective linear guide, running parallel to the flow direction, both open inside the working space of the buffering device 100. In particular, both the guides, placed at the same level, run along an extension substantially corresponding to the free area 507 of the buffering device 100, thereby the opposite ends of the intermediate shaft 545 are fitted inside respective guides, and the intermediate shaft 545 can be moved and locked in any position along the extension of the free area 507.

Since the free area 507 has just a virtual boundary depending on the size and the orientation of the sheets processable by the buffering device 100, the extension of the guide must cover any possible position of the boundary between the free area 507 and the stack area 506.

In the present embodiment of the invention, the guides are formed by respective passing through linear slits 555, and the ends of the intermediate idle shaft 545 projects outside the respective side walls. At one end of this shaft, a key 565 is provided, to lock the shaft in one specific position depending upon the size and the orientation of the sheets to be processed by the buffering device (see figures 6, 7, 10).

The intermediate shaft 545 comprises a series of idle wheels 420 mounted thereon by respective bearings so that they can freely rotate; in particular, the present embodiment shows four third idle wheels 420 spaced along the intermediate idle shaft 545; their position corresponds to the position of the first conveying belts 215.

The idle wheel 420 have a circumferential groove 421 that allows the corresponding first conveying belt 215 to pass through the respective groove 421, thereby not interfering with the idle wheels 420 themselves.

However, the idle wheels 420 are meant to bend an incoming sheet 500 causing a curve 520, i.e. lowering the sheet at the insertion thereof beneath the stack. Such a lowering induced by the idle wheels 420 allows the upper legs of the second conveying belt 224, i.e. the supporting plane, to increase their friction of the downward surface of the sheet, easing its drawing to the final position beneath the stack.

Moreover, by result of this pressing, the buffering stack 514 placed onto the supporting plane is locally detached at the rear edge thereof from the supporting plane, forming an insertion space, and allowing the passing through sheets to be inserted beneath the buffering stack 514, and such insertion is repeated again and again, at each incoming sheet.

The buffering device 100 is equipped with a first optical input sensor 060 placed substantially at the pressing device 400 (figure 5) and a second optical sensor 065 positioned above the buffering stack 514 and the friction wheel 213 (figure 10).

The first optical sensor 060 is used to detect the arrival of an incoming sheet through the inlet section 110, to check if the sheet is correctly drawn by the first and the second conveying belts 215, 224, and if it has been regularly inserted beneath the buffering stack 514 with no jamming.

The second optical sensor 065 is used to understand if the buffering stack 514 is empty or not, and possibly to detect the stack height 505.

The related pieces of information can be used by a control unit to set an alarm or to send signals to the upstream and/or the downstream devices.

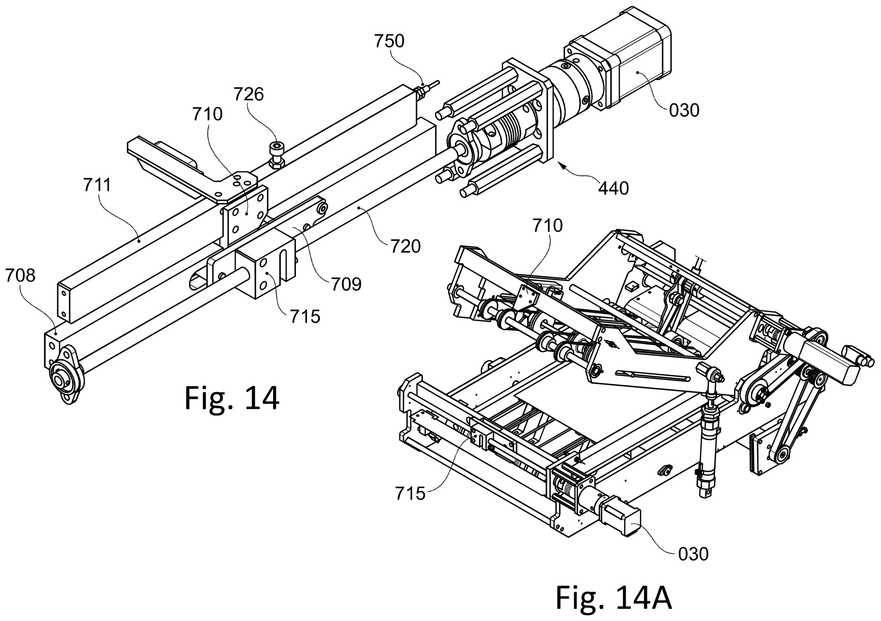

In the buffering device 100, a height adjusting device 440 is provided to finely adjust the friction provided by both the first and the second conveying belts 215 and 224, namely raising or lowering the swivel member 020 by a few millimetres with respect to the base member 010 (figure 14).

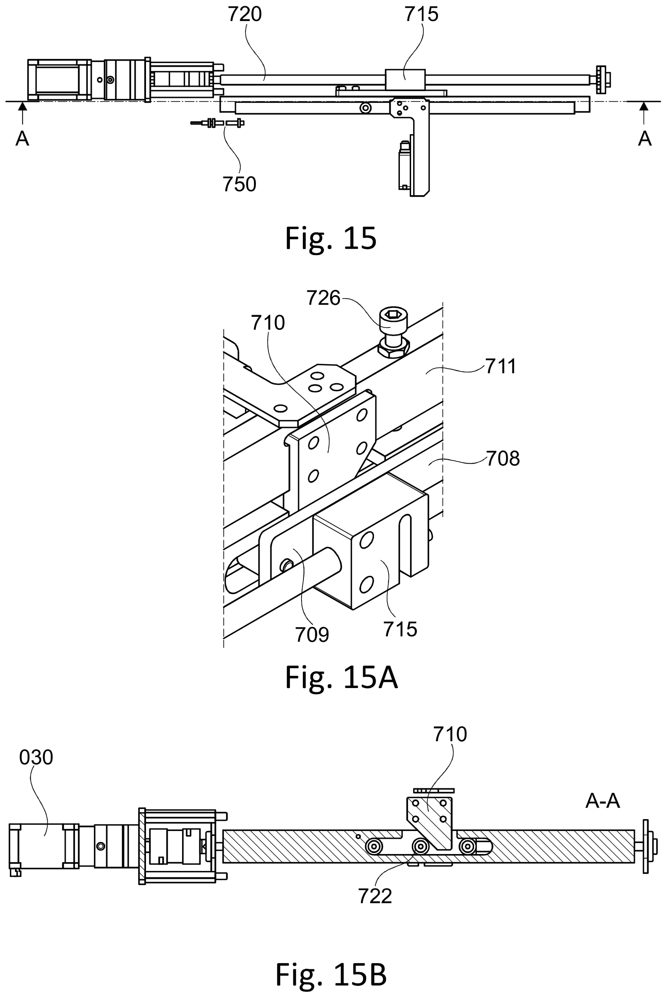

The height adjusting device 440 comprises a second service motor 030 connected to the base member 010 at the inlet section 120. The second service motor 030 is arranged to finely rotate a worm screw shaft 720 clockwise or counterclockwise, to move an engaged carriage 715 forward or backward along the worm screw shaft 720. The carriage 715 is integral with a follower bearing 722 (figure 15B) interfering with the periphery of a cam 710 which is connected in a fixed position to a first rear bar 711 connected to the swivel member 020 at the inlet section 12o thereof.

The follower bearing 722 is mounted on a sliding plate 709 facing a second rear bar 708 integral with the base member 010 at the inlet section 120: the incoming sheets then must pass below the second rear bar 708 to be caught first by the second conveying belts 224.

Since the cam 710 has a tilted profile 723 in contact with the follower bearing 722, resting upon it by gravity when the swivel member 020 is set horizontal, the movement of the carriage 715 driven by the second service motor 030 causes the cam 710, the first rear bar 711 and the swivel member 020 it to move upwards or downwards.

The second service motor 030 can be operated step by step in response to the variation of the stack height 505 detected by the second optical sensor 065 or by a signal coming from a control unit.

Therefore, it is possible to keep a constant friction by the first and the second conveying belts 215, 224 on the created stack of sheets, regardless of its height 505.

Further, the first rear bar 711 has an adjustment screw 726 to adjust the level of the cam 710. Then, a contact sensor 750 is provided between the first and the second rear bars 711, 708 to let the control unit know when the swivel member 020 is placed in operation.

The buffering device 100 is completed by a presence sensor for detecting the number of sheets extracted from the stack, determining if only one sheet has passed through the outlet section 110.

The presence sensor is an ultrasonic sensor, and it is composed by an emitter 067 and a receiver 068 (figure 6) arranged at the outlet section 110 in such a way that the extracted sheets are forced to pass between them. Depending on the vibrations acquired by the receiver 068, the presence sensor can detect the number of the sheets in transit and whether it is made up of a single body or whether there are several overlapping bodies of more sheets.

An automatic rejection system can be installed at the input, where a first linear actuator 097 acts on a first movable sheet deflector 101 at the inlet section 120, which is able to divert the incoming input sheet 504 and then discard it in an underlying box beneath the buffering device 100.

This function is important when the downstream device is not in a working condition for any reason and therefore not able to accept additional incoming sheets. This happens when the sheets are produced by a digital printer, which when a batch printing cycle begins, it cannot be interrupted. Therefore, it is required to discard the sheets coming out of the printout, which could not be managed by the device.

Another rejecting device is placed at the outlet section 110 of the buffering device 100: a second linear actuator 098 is provided to displace a second sheet deflector, which activates a second movable sheet deflector 099 to divert the sheet wrongly extracted from the stack into a box beneath the buffering device 100, for instance when the presence sensor 067, 068 detects that more than one sheet has been removed from the stack, to prevent any malfunctions in the downstream device.

The base member 010 further includes respective first sheet side guides 032, 033 at the respective walls thereof, facing inwards, ensuring that the sheets are correctly aligned and centered (figure 7). The two guides 032, 033 are adjusted by means of a second control knob 031, which can widen or tighten them, to make them conform to the format of the sheet to be processed.

All the cited motors are meant to be electric motors acting as servomotor equipped with electronic encoder driven feedback allowing the shaft connected thereto to rotate at a controlled and precise rate. All these motors and all the sensors provided throughout the buffering system 100 refer to a control unit having a user interface.

Therefore, the buffering system 100 can be monitored and controlled via this user interface, which may be physically attached to the apparatus or may be located remotely. The user interface can be a touchscreen or other similar input device, and it can display parameters and operating conditions to an operator to control the functioning of the system 100.

The user interface is associated with at least one processor that is configured to control all the scheduled operations of the system 100. The user interface may employ software, hardware, firmware, hardwiring, or combinations of any of these. Features implementing functions can also be physically located at various positions, including being distributed such that portions of functions are implemented at different physical locations.

Aspects of the present disclosure described herein, such as the speed and control of rollers, tilting chutes, and carrier guides, as described above, and the monitoring and controlling of various parameters, can be performed using any type of computing device, such as a computer or programmable logic controller (PLC), that includes a processor, e.g., a central processing unit, or any combination of computing devices where each device performs at least part of the process or method. In some embodiments, systems and methods described herein may be performed with a handheld device, e.g., a smart tablet, a smart phone, or a specialty device produced for the system.

To the dynamic buffering apparatus and method described above, a man skilled in the art, to satisfy further and contingent needs, may make several further modifications and variations, all of them, however, being included in the protection scope of the present invention, as defined by the attached claims.

## Claims

1. Dynamic buffering apparatus (800) for the processing individual sheet documents having at least one respective identification code, comprising:
• a conveyor line, and an upstream device (810) delivering documents in individual sheets through said conveyor line;
• a individual sheet (505) buffering device (100) comprising a deformable supporting plane, which creates a collection of sheets in the form of a sheet stack (514) on said supporting plane, in which the last incoming sheet (510) is placed below the stack at its base by deforming the supporting plane, and where the first single outgoing sheet (520) is released from the top of the sheet stack (514) forming an outgoing sheet stream (525);
• a reading device (831) that reads the identification code of the passing through outgoing sheets provided by the buffering device;
• a downstream device (840), receiving the outgoing sheet stream (525) for the processing thereof; and
• a control unit (900), comprising at least one memory, one microprocessor, one database (910), and a software for managing the stream of documents, which receives data related to the reading of the identification codes from the reading device; which provides information, extracted from said database (910), to the upstream and downstream devices (810, 840) for the correct processing and delivering of the sheets; and Which controls the release of the outgoing sheets from the buffering device (100) with a timing synchronized with said downstream device.

2. Dynamic buffering apparatus (800) according to claim 1, wherein the buffering device (100) comprises:
• an inlet section (120), fed by the individual sheets supplied by the upstream device;
• an outlet section (110), from which the individual sheets (520) forming said outgoing sheet stream (525) are released; and
• a working space between the inlet section (120) and the outlet section (110), the buffering device (100) being configured to hold a buffering stack (514) of sheets stacked at a predetermined position within said working space on said deformable supporting plane moving under the buffering stack (514);
wherein said predetermined position identifies, on said supporting plane, a respective stack area (506) and a free area (507) where the sheets pass through; and wherein the supporting plane and the released sheet are deformed substantially at the boundary between the stack area (506) and the free area (507) by curving them downwards, thereby the buffering stack (514) is detached from the supporting plane, allowing the passing through sheets to be inserted beneath the buffering stack (514).

3. Dynamic buffering apparatus (800) according to claim 2, in which the buffering device (100) comprises:
• a drag device (090), provided to operate on individual sheets at the top of said buffering stack (514), to pick therefrom individual sheets to be released one by one forming said outgoing sheet stream (525);
• a flat bed conveyor forming said supporting plane sliding and conveying the individual sheets one by one from the inlet section (120); and
• a stop device (405) arranged at the outlet section end of the working space, to determine the position of the buffering stack (514) onto the supporting plane, thereby also determining a respective stack area (506).

4. Dynamic buffering apparatus (800) according to claim 3, wherein the buffering device (100) comprises a pressing device (400), apt to press said upward facing surface substantially at the boundary between the stack area (506) and the free area (507), acting on the passing through released sheet to the buffering stack (514), thereby both the passing through released sheet and the supporting plane are curved downwards, and thereby detaching the buffering stack (514) from the supporting plane, allowing said released sheet to be inserted beneath the buffering stack (514).

5. Dynamic buffering apparatus (800) according to claim 3 or 4, wherein the drag device (090) comprises a plurality of running endless conveying belts (215), having their respective lower legs extended between their respective pulleys, the lower legs of the conveyor belts (215) being placed to be in contact with the upper surface of the sheet at the top of the buffering stack (514) thereby causing a pressing force addressing that sheet to the extraction.

6. Dynamic buffering apparatus (800) according to any of the preceding claims 3 to 5, wherein the drag device (090) comprises at least one additional friction wheel (213), actively rotating, placed to intersect the sheet placed at the top of the buffering stack (514), to promote the movement of an outgoing sheet on demand, by enhancing its travel speed.

7. Dynamic buffering apparatus (800) according to claim 6, wherein the friction wheel (213) is coupled with a respective service motor (050) to be rotated at a determined spin rate, a disengaging device being provided, linked to the friction wheel (213), comprising a freewheel to disengage the friction wheel (213) and the service motor (050) thereof when the travel speed of the outgoing sheet exceed the peripheral speed of the friction wheel (213).

8. Dynamic buffering apparatus (800) according to claim 3, where the flat bed conveyor is a belt conveyor.

9. Dynamic buffering apparatus (800) according to claim 8, where the belt conveyor is a round belt conveyor, provided with several endless round conveying belts (224) having respective upper legs providing a flexible and elastic support plane, each round conveying belt (224) being run by respective drive and tail pulleys (227, 226) driven by a respective motor (040).

10. Dynamic buffering apparatus (800) according to claim 3, wherein the stop device (405) comprises a control wheel (410), placed at a predetermined position to provide contrast against the buffering stack (514) in cooperation with the drag device (090), and a stop wall (430) having a tilted surface facing the buffering stack (514).

11. Dynamic buffering apparatus (800) according to claim 3, wherein said supporting plane is formed into a base member (010), and the drag device (090) is formed in a respective swivel member (020) onto the base member (010), which can be rotated around a main shaft (200) integral to the base member (010) and rotatably coupling the base and swivel members (010, 020) to each other at the outlet section (110) of the buffering device (100).

12. Dynamic buffering apparatus (800) according to claim 11, comprising a height adjusting device (440) to raise or lower the swivel member (020) with respect to the base member (010).

13. Dynamic buffering apparatus (800) according to any of the preceding claims, in which that upstream device (810) is a printer configured to imprint, on any supplied sheet, said respective identification code, on the basis of instructions received from that control unit (900).

14. Dynamic buffering apparatus (800) according to any of the preceding claims, comprising a preliminary reading device (821) reading the identification code of the sheets supplied by the upstream device.

15. Method for the processing of documents apt to be used use as accompanying paper support in the direct mailing of cards or the like identifiable by a respective univocal code, providing the coupling of one or more cards or the like with a respective paper support generated by a printing process, the method comprising the following steps:
• reading the univocal codes identifying each card or the like of a group of N cards;
• using said univocal codes, querying a database that contains, for each card, a record containing the data required for the direct mailing of the card;
• starting from said records, generating a respective print instruction for each of the N cards of the group, and subsequently generating an overall print instruction gathering the print instructions of the paper supports of all the N cards of the group;
• printing of N documents to be used as paper supports, imprinting on each of them a respective identification code linked to a univocal code of one of the N cards of the group;
• buffering of the above documents, in the sequence in which they are supplied through the printing step, in a stack of individual sheets arranged one on top of the other, wherein the stack of individual sheets is arranged on a deformable supporting plane and wherein the stacking of the incoming sheets is carried out by deforming the supporting plane, and inserting the incoming sheet beneath the sheet stack, as the lower sheet of the stack, and so on for each further incoming sheet;
• releasing individual sheets, upon request of a processing device downstream the buffering stack, picking up the individual sheets at the top of the stack; and
• reading the identification code of the released individual sheet, and supplying a coupling station with the individual sheets to couple together the paper support and the corresponding card on the basis of the identification code on the sheet and of the univocal code identifying the card.
